# EUROPEAN PATENT SPECIFICATION

(11) **EP 1 658 185 B1**
(45) Date of publication and mention of the grant of the patent: **02.05.2007**
(21) Application number: 04749128.7
(22) Date of filing: 05.07.2004
(51) Int. Cl.: B60G 17/04, B60R 16/08, B60G 11/30, B60T 17/02

(54) **ARRANGEMENT IN A VEHICLE WITH AIR SUSPENSION**
ANORDNUNG IN EINEM FAHRZEUG MIT LUFTFEDERUNG
MECANISME DANS UN VEHICULE A SUSPENSION PNEUMATIQUE

(30) Priority: 21.08.2003 SE 0302259
(43) Date of publication of application: 24.05.2006
(73) Proprietor: Scania CV AB (publ), 151 87 Södertälje (SE)
(72) Inventor: STAAF, Magnus, S-155 34 Nykvarn (SE); REIMDAL, Roine, S-645 44 Strängnäs (SE)
(86) International application number: PCT/SE2004/001092
(87) International publication number: WO 2005/018965

(56) References cited:
- EP-A1- 0 557 547
- SE-C3- 507 378
- US-A- 6 036 449

## Description

### TECHNICAL FIELD

The invention relates generally to vehicles with air suspension comprising a compressor and more specifically to an arrangement for controlling the compressor of such vehicles.

### BACKGROUND OF THE INVENTION

In vehicles, e.g. trucks, with air suspension, a compressor is provided to automatically charge an air supply system, comprising air tanks and air bellows, both when the pressure in the air supply system reaches a predetermined minimum pressure and when an air-consuming activity, such as raising the vehicle or load transfer between tag axle and drive axle of the vehicle, is requested by an operator, e.g. the driver, of the vehicle.

US-6171065-B1 discloses a vehicle with pneumatic springs that can be filled with compressed air by a control unit operated compressor.

US 60 36 449 A discloses an air compressor control in an arrangement according to the preamble of claim 1.

In today's vehicles, when an air-consuming activity, such as raising the vehicle, is requested by the operator, e.g. by pressing a button on a control box, and the compressor is automatically started, the pressure in the air supply system of the vehicle most often is insufficient or not optimal i.a. due to the fact that air has already been consumed during normal operation of the vehicle. This means that the activity requested by the operator will be time-consuming and that the operator will have to wait an extended time for the activity to finish, since it takes time for the compressor to build up the pressure where the requested activity may be performed most effectively.

A way to solve this problem is to always automatically activate the compressor as soon as the pressure in the compressed-air system is lower than a predetermined optimal pressure level for an activity that requires the highest pressure level in order to be performed in an effective way. This solution is however normally not used in vehicles today, since the compressor, which normally directly or indirectly is driven by an internal combustion engine, substantially increases the fuel consumption of the vehicle. A frequent use of the compressor naturally also decreases the service life of the compressor.

### SUMMARY OF THE INVENTION

The object of the invention is to eliminate the above problem to save time for the operator without substantially increasing the fuel consumption of the vehicle.

This is attained by the arrangement according to the invention in that an operator-operated control switch is provided to separately trigger the compressor to charge the air supply system up to a predetermined pressure. The separate triggering of the compressor is to be understood as an activation of the compressor without activating any air-consuming activity.

Hereby, the operator can trigger the compressor in advance of an air-consuming activity, e.g. when the vehicle is close to a loading or unloading place. Then, when the operator requests the air-consuming activity, the air supply system will have the predetermined pressure from the beginning and the activity will be finished quicker.

In one embodiment of the invention the control switch is a separate switch in a cab of the vehicle. Hereby is achieved that the driver easily can activate the compressor at will.

In another embodiment the control switch is included in a control box in the vehicle. The control switch may then be adapted to be operated by a button on the control box.

According to one embodiment the predetermined pressure is a substantially optimal pressure for the air consuming activity. Hereby is achieved that the air-consuming activity may be utilised most effectively directly from the start of the air-consuming activity.

The invention also relates to a vehicle, which comprises air suspension and the arrangement.

### BRIEF DESCRIPTION OF THE DRAWING

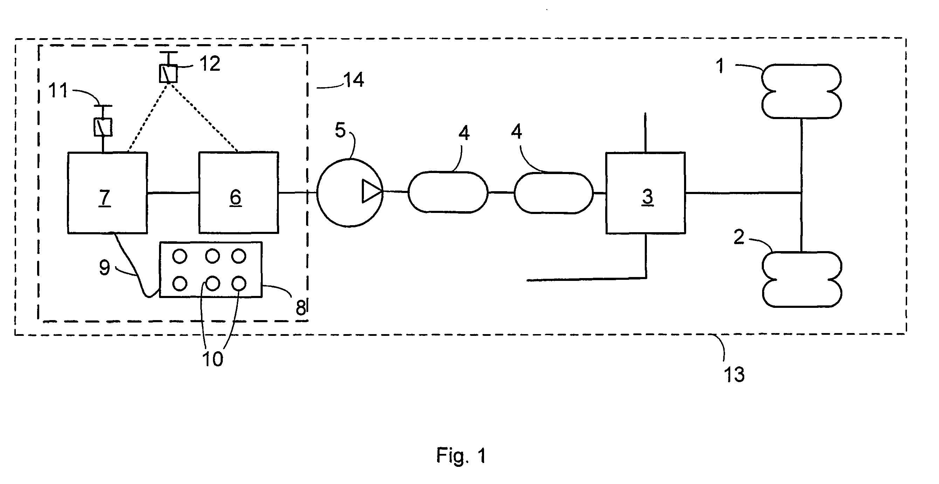

The invention will be described more in detail below with reference to the appended drawing on which Fig. 1 is a schematic illustration of an air supply system of a vehicle with air suspension.

### DESCRIPTION OF THE INVENTION

In Fig. 1, air bellows 1, 2 represent the air suspension of the drive axle (not shown) of a vehicle 13, e.g. a truck. For vehicles with full air suspension, the front axle of the truck will have its own air bellows (not shown). Also, if the truck has a tag axle (not shown) separate air bellows (not shown) would provide air suspension for the tag axle.

In a manner known per se, the air bellows 1, 2 are connected via a solenoid valve block 3 to air tanks 4 of the truck. If the truck has a tag axle, its air bellows would also be connected to the valve block 3. The same is true for the air bellows, if any, for the front axle. Even if only two air tanks 4 are shown in Fig. 1, it is to be understood that the number of air tanks can vary dependent on the actual type of truck.

The air tanks 4 are connected to a compressor 5 for charging the air tanks with compressed air. The air tanks 4 and the compressor 5 constitute the air supply system of the truck.

Also in a manner known per se, the compressor 5 is controlled by an air processing control unit 6 that in its turn receives electrical control signals from a control unit 7 for automatically adjusting chassis height both when the truck is driven and when it is stationary. To trigger control signals from the control unit 7 to the air processing control unit 6, an operator-operated, portable control box 8 is provided in a cab 14 of the truck.
In Fig. 1, the control box 8 is shown connected to the control unit 7 by a wire 9. However, it is to be understood that the connection between the control box 8 and the control unit 7 equally well can be wireless. It shall also be understood that the wire 9 may have such a length that the control box 8 may be moved and operated outside the vehicle.

In a manner known per se, the control box 8 is provided with a number of buttons 10 for operating switches (not shown) for initiating different air-consuming activities such as raising rear or front of the vehicle.

An air-consuming activity such as load transfer from tag axle to drive axle can also be initiated by operating a separate switch 11 in a cab 14 of the truck 13.

When an air-consuming activity is initiated by an operator via the control box 9 or the switch 11, the control unit 7 sends a corresponding electrical control signal to the air processing control unit 6 to start the compressor 5 in order to charge the air tanks 4.

During normal operation of the vehicle, air is consumed in the air tanks 4. The air processing control unit 6 is provided with pressure sensors (not shown) to sense the pressure in the air tanks 4 and trigger the air processing control unit 6 to start the compressor 5 when the pressure in the air tanks 4 reaches a pre-set predetermined minimum value.

As mentioned above, when an air-consuming activity, such as raising, is initiated by the operator by pressing a corresponding button 10 on the control box 8 or closing the switch 11, and the compressor 5 is automatically started, most often, the pressure in the air tanks 4 is insufficient or not optimal from the beginning of the operation due to the fact that air in the air tanks 4 has already been consumed during normal operation of the vehicle and/or by an earlier air-consuming activity.

In accordance with the invention, an operator-operated control switch 12 is provided to separately trigger the compressor 5 via the air processing control unit 6 to start to charge the air tanks 4 up to a predetermined "sufficient" or "optimal" pressure, which is higher than the predetermined minimum-value, in advance of any known air-consuming activity. If the vehicle enables several air-consuming activities, the predetermined pressure may be set to a pressure that is considered "sufficient" for all the air-consuming activities, that is optimal for an air-consuming activity that requires the highest pressure or that is optimal for an air-consuming activity that is the most frequently used of all the air-consuming activities.

As indicated by broken lines in Fig. 1, the control switch 12 can be connected to trigger the compressor 5 either directly via the air processing control unit 6 or indirectly via the control unit 7 and the air processing control unit 6.

In Fig. 1, the control switch 12 is shown as a separate switch in the cab 14, but outside the control box 8. It is however to be understood that the control switch 12 can be included within the control box 8 to be operated by one of the buttons 10 on the control box 8.

By closing the control switch 12 to trigger the compressor 5 in advance of an expected air-consuming activity, the air tanks 4 will be pressurized to a sufficient pressure at the time the operator initiates the air-consuming activity by pressing a corresponding button 10 on the control box 8.

## Claims

1. An arrangement in a vehicle with air suspension (1, 2) comprising an air supply system (4) with a compressor (5) that is adapted to automatically charge the air supply system (4) both when the pressure therein reaches a predetermined minimum pressure and when an air-consuming activity is initiated by an operator of the vehicle, **characterized in that** an operator-operated control switch (12) is provided to separately trigger the compressor (5) to charge the air supply system (4) up to a predetermined pressure.

2. The arrangement according to claim 1, **characterized in that** the control switch (12) is a separate switch in a cab (14) of the vehicle (13).

3. The arrangement according to claim 1, **characterized in that** the control switch (12) is included in a control box (8) in the vehicle (13).

4. The arrangement according to claim 3, **characterized in that** the control switch (12) is adapted to be operated by a button (10) on the control box (8).

5. The arrangement according to any one of the preceding claims, **characterised in that** the predetermined pressure is a substantially optimal pressure for the air consuming activity.

6. A vehicle (13) comprising air suspension (1, 2) and an arrangement according to claim 1.

## Patentansprüche

1. Anordnung in einem Fahrzeug mit einer Luftfederung (1, 2), umfassend ein Luftzuführsystem (4) mit einem Kompressor (5), der dazu ausgelegt ist, automatisch das Luftzuführsystem (4) zu laden, sowohl dann, wenn der Druck in diesem einen vorbestimmten Minimaldruck erreicht, als auch dann, wenn eine Luftverbrauchsaktivität durch einen Bediener des Fahrzeugs eingeleitet wird,
**dadurch gekennzeichnet, dass** ein bedienerbetätigter Steuerschalter (12) vorgesehen ist, um separat den Kompressor (5) zum Aufladen des Luftzuführsystems (4) auf einen vorbestimmten Druck anzusteuern.

2. Anordnung nach Anspruch 1,
**dadurch gekennzeichnet, dass** der Steuerschalter (12) ein separater Schalter in einer Kabine (14) des Fahrzeugs (13) ist.

3. Anordnung nach Anspruch 1,
**dadurch gekennzeichnet, dass** der Steuerschalter (12) in einem Steuerkasten (8) in dem Fahrzeug (13) angeordnet ist.

4. Anordnung nach Anspruch 3,
**dadurch gekennzeichnet, dass** der Steuerschalter (12) dazu ausgelegt ist, um durch einen Knopf (10) an dem Steuerkasten (8) betätigt zu werden.

5. Anordnung nach einem der vorangehenden Ansprüche,
**dadurch gekennzeichnet, dass** der vorbestimmte Druck im Wesentlichen der optimale Druck für die Luftverbrauchsaktivität ist.

6. Fahrzeug (13) umfassend eine Luftfederung (1, 2) und eine Anordnung nach Anspruch 1.

## Revendications

1. Mécanisme dans un véhicule à suspension pneumatique (1, 2), comprenant un système d'alimentation en air (4) ayant un compresseur (5) qui est conçu pour charger automatiquement le système d'alimentation en air (4) à la fois lorsque la pression à l'intérieur de celui-ci atteint une pression minimale prédéterminée et lorsqu'une activité consommatrice d'air est démarrée par un opérateur du véhicule, **caractérisé en ce qu'**il est prévu un interrupteur de commande actionné par l'opérateur (12) pour déclencher séparément le compresseur (5) de façon à charger le système d'alimentation en air (4) jusqu'à une pression prédéterminée.

2. Mécanisme selon la revendication 1, **caractérisé en ce que** l'interrupteur de commande (12) est un interrupteur distinct dans une cabine (14) du véhicule (13).

3. Mécanisme selon la revendication 1, **caractérisé en ce que** l'interrupteur de commande (12) est inclus dans un boîtier de commande (8) du véhicule (13).

4. Mécanisme selon la revendication 3, **caractérisé en ce que** l'interrupteur de commande (12) est conçu pour être actionné par un bouton (10) situé sur le boîtier de commande (8).

5. Mécanisme selon l'une quelconque des revendications précédentes, **caractérisé en ce que** la pression prédéterminée est une pression essentiellement optimale pour l'activité consommatrice d'air.

6. Véhicule (13) comprenant une suspension pneumatique (1, 2) et un mécanisme selon la revendication 1.
